## Europäisches Patentamt

## European Patent Office

## Office européen des brevets

(19)

(11) Veröffentlichungsnummer: **0 196 457**
**A1**

(12) **EUROPÄISCHE PATENTANMELDUNG**

(21) Anmeldenummer: **86102512.0**

(22) Anmeldetag: **26.02.86**

(51) Int. Cl.⁴: **H 02 K 37/14**
**H 02 K 21/14**

(30) Priorität: **01.04.85 CH 1407/85**

(43) Veröffentlichungstag der Anmeldung:
**08.10.86 Patentblatt 86/41**

(84) Benannte Vertragsstaaten:
**AT CH DE FR GB IT LI NL**

(71) Anmelder: **LGZ LANDIS & GYR ZUG AG**

**CH-6301 Zug(CH)**

(72) Erfinder: **Lechner, Hubert**
**Hertizentrum 5**
**CH-6300 Zug(CH)**

(54) **Einphasenschrittmotor.**

(57) Der Einphasenscrittmotor mit vorbestimmter Drehrichtung besteht aus einem 2p-polig auf dem Aussenumfang magnetisierten dauermagnetischen Läufer (4) und einem zweiteiligen Ständer (1), der eine Spule (9) umgibt und mit sich in den Raum zwischen der Spule (9) und dem Läufer (4) erstreckenden Polarmen (7, 8) gebildeten Polen versehen ist. Der Ständer (1) bildet einen gegen aussen abgeschlossenen, in sich geschlossenen Magnetkreis. Die Polarme (7, 8) weisen einen radial vom Läufer (4) in Drehrichtung im wesentlichen stetig oder stufenförmig abnehmenden Abstand auf. Der Einphasenschrittmotor ist besonders für den Antrieb von Zählwerken in Elektrizitätszählern geeignet.

Fig. 2

Einphasenschrittmotor

Die Erfindung bezieht sich auf einen Einphasenschrittmotor mit vorbestimmter Drehrichtung nach dem Oberbegriff des Patentanspruchs 1.

Einphasenschrittmotoren mit vorbestimmter Drehrichtung, die elektrische Impulse wechselnder Polarität in schrittweise Drehbewegungen umwandeln, weisen zur Bestimmung der Drehrichtung eine magnetische Unsymmetrie auf. Beim Einphasenschrittmotor gemäss der CH-PS 541 893 wird diese Unsymmetrie dadurch erreicht, dass Hauptpole und Hilfspole vorgesehen sind, wobei die Hilfspole gegenüber den Hauptpolen um 45° el versetzt und derart angeordnet sind, dass vom Erregerstrom in den Hilfspolen kein resultierendes Drehmoment erzeugt wird. Die beiden Polarten sind Bestandteil eines zweiteiligen, kapselförmigen Ständers, wobei die Stirnseite der Kapsel im Bereich der beiden Enden der Hilfspole Aussparungen aufweist.

Der Erfindung liegt die Aufgabe zugrunde, einen Einphasenschrittmotor anzugeben, der von aussen magnetisch nicht beeinflussbar ist, und möglichst geringe Streufelder erzeugt.

Die Aufgabe wird durch die Merkmale des Kennzeichens des Patentanspruchs 1 gelöst.

Die Erfindung wird im folgenden anhand einer Zeichnung näher erläutert.

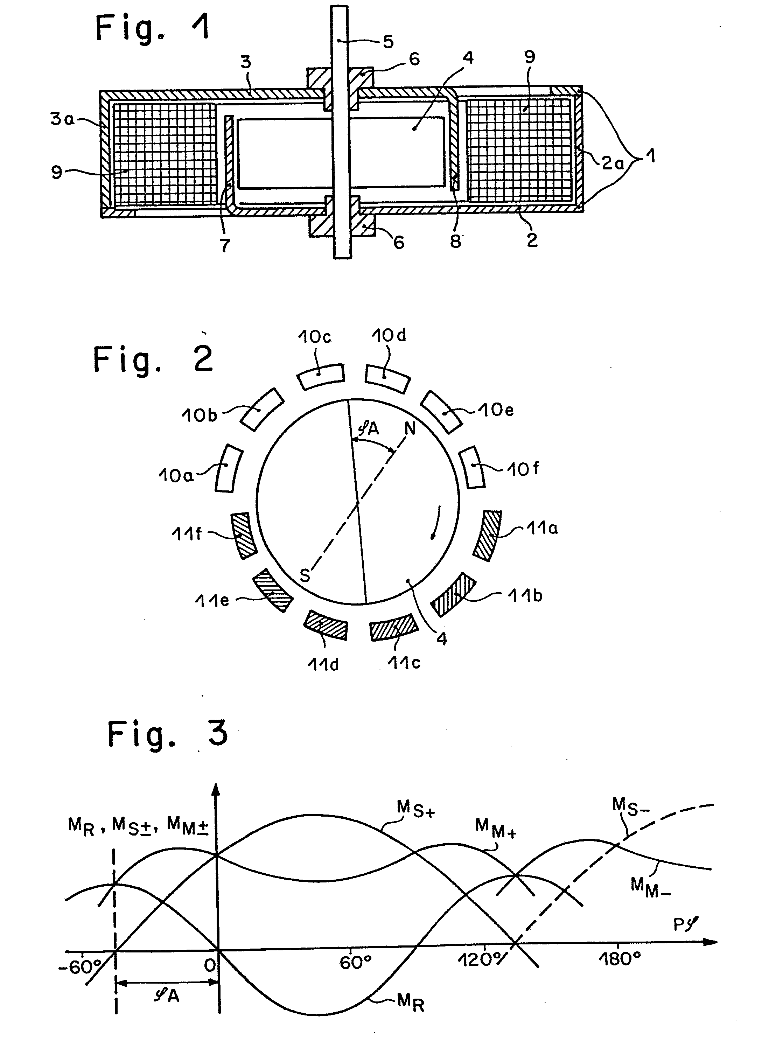

Es zeigen: Fig. 1  einen Schrittmotor in der Schnittdarstellung;
Fig. 2, 4 und 5 Prinzipdarstellungen verschiedener Polfolgen des Schrittmotors und
Fig. 3  ein Diagramm.

Der Einphasenschrittmotor mit vorbestimmter Drehrichtung gemäss Fig. 1 besteht aus einem Ständer 1, der aus zwei Ständerhälften 2 und 3 gebildet ist, aus einem Läufer 4, dessen Achse 5 in je einem in jeder Ständerhälfte 2, 3 angebrachten Lager 6 frei drehbar geführt ist, und aus einer Spule 9.

PA 2313                                    ./.

Die beiden Ständerhälften 2 und 3 bestehen aus einem weichmagnetischen Blech, das am Rande Laschen 2a oder 3a aufweist, die L-förmig rechtwinklig umgebogen sind, oder aus einer topfförmigen, durch eine Tiefziehoperation hergestellten Ständerhälfte 2, die die Teile 2a und 3a umfasst, und einer ebenen Ständerhälfte 3. Die beiden Ständerhälften 2 und 3 schliessen dicht aufeinander. Sie besitzen Pole, die durch aus den stirnseitigen Teilen der Ständerhälften 2 und 3 ausgestanzt und rechtwinklig nach innen in den Raum zwischen dem Läufer 4 und der Spule 9 umgebogenen Polarmen 7 und 8 gebildet sind. Zur besseren Uebersicht sind nur je ein Polarm 7 und 8 der Ständerhälften 2 und 3 eingezeichnet, die in der Schnittebene liegen. Die Polarme 7 und 8 besitzen Rechteckform, so dass die Ausklinkungen nur eine kleine nach aussen offene Fläche bilden.

Der Läufer 4 besteht aus einem zylinderförmigen Körper aus Dauermagnetmaterial, der auf dem Aussenumfang mit einer Polpaarzahl p magnetisiert ist. Da er von den zwei Ständerhälften 2 und 3 und den Polarmen 7 und 8 käfigartig umgeben ist, kann er von äusseren Magnetfeldern nicht beeinflusst werden.

Die Polarme 7, 8 sind in einer von der Polpaarzahl p des Läufers 4 abhängigen Zahl von p.n je Pol angeordnet und deren Abstand vom Läufer 4 nimmt in Drehrichtung im wesentlichen ab, was bei der Erklärung der Fig. 2, 4 und 5 näher ausgeführt wird.

Die Spule 9 wird mittels bipolarer Gleichspannungsimpulse erregt, wobei die positiven und negativen Amplituden als gleich gross angenommen werden. Der Läufer 4 nimmt dabei $180^{0}$/p verschobene Positionen ein.

In der Fig. 2 ist für den Fall eines Einphasenschrittmotors mit einem zweipoligen Läufer 4 (d.h. p = 1) eine erste Art von Polfolgen dargestellt. Deren Polarme 10a bis 10f sind Bestandteil der Ständerhälfte 3, während die ausgefüllt gezeichneten Polarme 11a bis 11f in der Ständerhälfte 2 angebracht sind. Die Anzahl der Polarme 10a bis 10f und 11a bis 11f ist in diesem Falle jeweils n = 6. Die Polarme 10a bis 10f und 11a bis 11f bilden einen keilförmigen Luftspalt,

./.

PA 2313

bei welchem der Abstand der Polarme 10a bis 10f und 11a bis 11f zum Läufer 4 quasi stetig in dessen Drehrichtung abnimmt. Infolge der durch diese Anordnung bewirkten Asymmetrie des magnetischen Kreises sind die mit der minimalen Reluktanz übereinstimmenden gestrichelt gezeichneten Raststellungen des Läufers 4 gegenüber der ausgezogen gezeichneten, im wesentlichen mit der Mittenstellung zwischen den gleichpoligen Polarmen 10a bis 10f und 11a bis 11f übereinstimmenden Ständerhauptachse um den Winkel $\varphi_A$ verschoben.

Im Diagramm der Fig. 3 sind die Motormomente in Funktion des Drehwinkels $\varphi$ des Einphasenschrittmotors nach der Fig. 1 dargestellt. Beim Stand der Technik, z.B. nach der CH-PS 541 893, weisen die positiven und negativen Motormomente nur ein einziges ausgeprägtes Maximum auf, während ein zweites verkümmertes Maximum praktisch annähernd gleich gross wie ein vorhandenes Minimum ist. Durch die Anordnung der Polarme 10a bis 10f und 11a bis 11f der Fig. 2 wird beim Einphasenschrittmotor nach der Erfindung der Wert des zweiten vordem verkümmerten Maximums und damit auch der Wert des Minimums stark angehoben. Daher entstehen die in der Fig. 3 dargestellten Motormomente $M_{M+}$ und $M_{M-}$, welche je zwei annähernd gleich grosse Maxima besitzen, die durch ein stark angehobenes Minimum voneinander getrennt sind.

Gemäss der Fig. 3 wird die Lage des Läufers 4 im stromlosen Zustand der Spule 9 der Fig. 1 durch ein Rastmoment $M_R$ bestimmt, das z.B. einer Sinusfunktion folgt und die Nullachse bei $0°$, $90°$, $180°$, $270°$ und $360°$ el. schneidet. Bei positiver Erregung wirkt ein Motormoment $M_{M+}$, das sich aus dem Rastmoment $M_R$ und einem durch die Erregung der Statorpole hervorgerufenen Schaltmoment $M_{S+}$ zusammensetzt. Bei negativer Erregung wirkt ein Motormoment $M_{M-}$, das sich aus dem Rastmoment $M_R$ und einem durch die Erregung der Statorpole hervorgerufenen gestrichelt gezeichneten Schaltmoment $M_{S-}$ zusammensetzt, wobei das Schaltmoment $M_{S-}$ den gleichen Verlauf wie das Schaltmoment $M_{S+}$ aufweist, gegenüber diesem jedoch um $180°$ el. nacheilt. Das Maximum der Kennlinie des Schaltmomentes $M_{S+}$ bzw. des Schaltmomentes $M_{S-}$ liegt idealerweise bei einem Drehwinkel $\varphi$, bei dem das Rastmoment $M_R$ annähernd ein Minimum besitzt. Es gelten jeweils die Gleichungen:

./.

$$M_{M+} = M_R + M_{S+} \quad \text{und}$$

$$M_{M-} = M_R + M_{S-}$$

Die Grösse des Erregerstromes wird vorzugsweise derart gewählt, dass die Amplituden der Schaltmomente $M_{S+}$ und $M_{S-}$ doppelt so gross sind wie die Amplitude des Rastmomentes $M_R$. Es gilt dann:

$$M_{S+,max} = M_{S-,max} = 2 \cdot M_{R,max}.$$

Dadurch, dass der Läufer 4 in der Raststellung um den Winkel $\varphi_A$ beim Anlaufen verdreht ist, ist beim Anlegen einer Spannung an die Spule 9 der Fig. 1 ein Anlaufdrehmoment vorhanden und der Läufer 4 erhält eine definierte Anlaufdrehrichtung, in der Fig. 2 in Uhrzeigerrichtung. Der Läufer 4 hat seine stabile Lage bei 0 und 180° el + jeweils $\varphi_A$. Das Motormoment $M_M$ ($0°$ + $\varphi_A$) und ($180°$ + $\varphi_A$) weist eine positiven Wert auf, was das erwünschte Anlaufdrehmoment hervorruft.

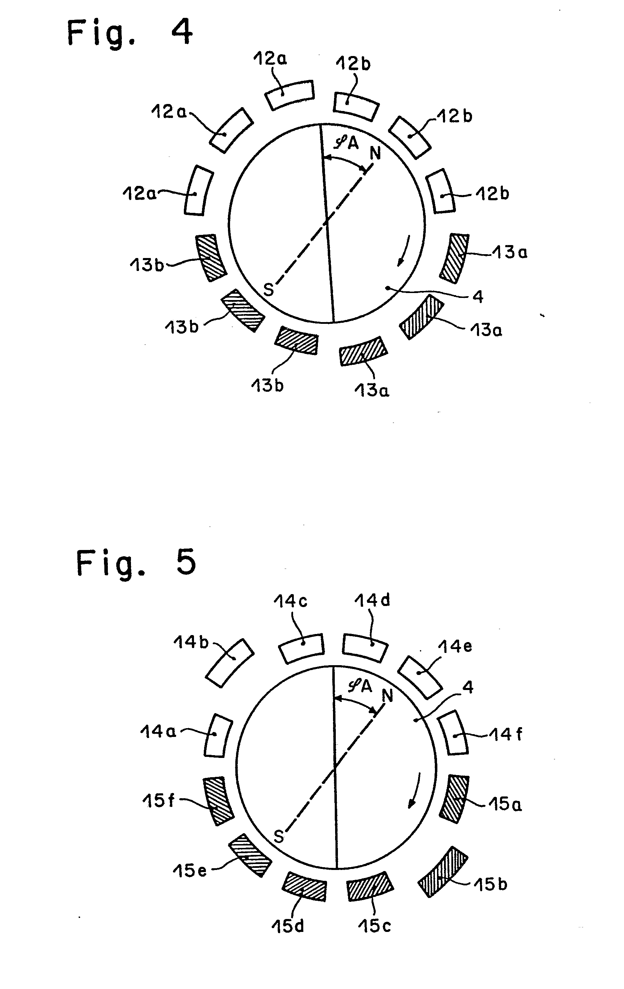

Bei der Polfolge nach der Fig. 4 wird der in Drehrichtung abnehmende Abstand der Polarme 12a bis 12b und 13a bis 13b auf eine von derjenigen der Fig. 2 verschiedenen, in der Wirkungsweise jedoch analogen Form erreicht. Die drei Polarme 13a der Ständerhälfte 2 der Fig. 1 und die drei Polarme 12a der Ständerhälfte 3 der Fig. 1 sind in einer Stufe mit einem untereinander gleichen, grösseren Abstand vom Läufer 4 angeordnet als die drei Polarme 13b der Ständerhälfte 2 der Fig. 1 und die drei Polarme 12b der Ständerhälfte 3 der Fig. 1. Die gestrichelt gezeichnete Raststellung des Läufers 4 befindet sich wiederum in einer Stellung minimaler Reluktanz zwischen dem Läufer 4 und den näheren Polarmen 12b und 13b. Die Anzahl der Polarme 12a, 12b und 13a und 13b ist jeweils n = 6.

Auch durch die Polfolge der Fig. 5 wird eine ähnliche Wirkung wie durch diejenige der Fig. 2 erzielt. In dieser Ausführungsart sind von insgesamt n > 2 die Polarme 15c bis 15f der Ständerhälfte 2 der Fig. 1 und die Polarme 14c bis 14f der Ständerhälfte 3 der Fig. 1 in einem unter sich gleichen, geringen Abstand vom Läufer 4 ange-

PA 2313    ./.

0196457

ordnet. Der in Drehrichtung gesehen an zweiter Stelle befindliche
Polarm 15b der Ständerhälfte 2 der Fig. 1 und der Polarm 14b der
Ständerhälfte 3 der Fig. 1 nehmen dagegen einen mehrfach grösseren
Abstand vom Läufer 4 gegenüber den Polarmen 14a und 15a ein. Diese jeweils in Laufrichtung des Läufers 4 gesehen ersten Polarme 14a und
15a sind in gleichen Abstand von Läufer 4 wie die Polarme 14c bis
14f und 15c bis 15f angeordnet. Die gestrichelt gezeichnete Raststellung des Läufers 4 stimmt wiederum ungefähr mit der Stellung
der niedrigsten Reluktanz zwischen dem Läufer 4 und den Polarmen
14c bis 14f, bzw. 15c bis 15f mit dem kleinen Abstand überein. Die
Anzahl der Polarme 14a bis 14f und 15a bis 15f ist grösser als n = 2,
in diesem Fall jeweils n = 6.

Der Ständer 1 des beschriebenen Einphasenschrittmotors kann auf
einfache Art durch eine Tiefzieh- und/oder Stanzoperation mittels
unkomplizierter Formen und Umbiegen der Polarme 7, 8, 10a bis 10f,
11a bis 11f, 12a, 12b, 13a, 13b, 14a bis 14f, 15a bis 15f und der
Läufer 4 durch Spritzen von ferrithaltigen Kunststoffmischungen
hergestellt werden. Die Kleinheit der Oeffnungen der Ausklinkungen
und die Abschirmung des Läufers 4 durch die Polarme 7, 8, 10a bis
10f, 11a bis 11f, 12a, 12b, 13a, 13b, 14a bis 14f, und 15a bis 15b
gegenüber äusseren Magnetfeldern erweisen sich besonders günstig für
den Antrieb von Zählwerken in Elektrizitätszählern.

./.

PA 2313

- 6 -

0196457

PATENTANSPRUECHE

1. Einphasenschrittmotor mit vorbestimmter Drehrichtung, mit einem 2p-polig auf dem Aussenumfang magnetisierten dauermagnetischen Läufer und mit einem zweiteiligen Ständer, der eine Spule umgibt und mit durch Polarme gebildeten Polen versehen ist, die sich von beiden Seiten des Ständers in axialer Richtung in den Raum zwischen der Spule und dem Läufer erstrecken, dadurch gekennzeichnet, dass der Ständer (1) in den Stirnseiten ausschliesslich durch Polarme (7, 8, 10a bis 10f, 11a bis 11f, 12a, 12b, 13a, 13b, 14a bis 14f, 15a bis 15f) gebildete Oeffnungen aufweist, dass die einzelnen Pole des Ständers (1) von 2pn über den ganzen Umfang lückenlos aneinandergereihter Polarme (7, 8, 10a bis 10f, 11a bis 11f, 12a, 12b, 13a, 13b, 14a bis 14f, 15a bis 15f) gebildet sind, bei denen der radiale Abstand vom Läufer (4) mit Ausnahme der ersten (14a, 15a), falls n > 2 ist, in Drehrichtung abnimmt und die eine im wesentlichen vollständige Abschirmung des Läufers (4) gegen äussere Magnetfelder bilden.

2. Einphasenschrittmotor nach Anspruch 1, dadurch gekennzeichnet, dass die Polarme (7, 8, 10a bis 10f, 11a bis 11f, 12a, 12b, 13a, 13b, 14a bis 14f, 15a bis 15f) rechteckig ausgebildet und aus Ständerhälften (2 bzw. 3) ausgestanzt und rechtwinklig umgebogen sind.

3. Einphasenschrittmotor nach Anspruch 2, dadurch gekennzeichnet, dass die Polarme (10a bis 10f, 11a bis 11f) einen in Drehrichtung de Läufers (4) quasi stetig abnehmenden Abstand von diesem aufweisen.

4. Einphasenschrittmotor nach Anspruch 2, dadurch gekennzeichnet, dass die Polarme (12a, 12b, 13a, 13b) einen in Drehrichtung des Läufers (4) in einer Stufe abnehmenden Abstand von diesem aufweisen.

5. Einphasenschrittmotor nach Anspruch 2, dadurch gekennzeichnet, dass die Polarme (14a bis 14f, bzw. 15a bis 15f) in einer Zahl von n > 2 vorhanden sind und dass in Drehrichtung gesehen alle Polarme (14a, 14c bis 14f, 15a, 15c bis 15f) und unter sich gleich geringen Abstand vom Läufer (4) haben bis auf den jeweils zweiten Polarm (14b, 15b), welcher in einem grösseren Abstand vom Läufer (4) angeordnet ist. ./.

PA 2313

Fig. 1

Fig. 2

Fig. 3

# Fig. 4

# Fig. 5

PA 2313

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 201 575 (DE VALROGER et al.)<br>* Seite 24, Zeile 26 - Seite 25, Zeile 29; Seite 35, Zeilen 2-7; Figuren 23,25,26 * | 1,3-5 | H 02 K 37/14<br>H 02 K 21/14 |
| | --- | | |
| Y | US-A-3 414 751 (BOSSARD)<br>* Spalte 2, Zeilen 13-63; Figuren 1-3 * | 1,2 | |
| | --- | | |
| A | DE-A-1 638 302 (TRI-TECH INC.)<br>* Seite 14, Zeile 11 - Seite 15, Zeile 23; Seite 25, Zeile 17 - Seite 26, Zeile 3; Figuren 1,7,8,16 * | 1,3-5 | |
| | --- | | |
| Y | DE-A-2 536 138 (LENCO)<br>* Seite 3, Zeile 21 - Seite 4, Zeile 8; Seite 10, Zeile 6 - Seite 11, Zeile 1; Figuren 1-3 * | 1,3-5 | RECHERCHIERTE SACHGEBIETE (Int. Cl.4)<br><br>H 02 K |
| | --- | | |
| D,Y | CH-A- 541 893 (LANDIS & GYR)<br>* Spalte 2, Zeilen 10-56; Figuren 3,4 * | 1,2 | |
| | --- | | |
| A | DE-C- 753 285 (AEG)<br>* Seite 2, Zeilen 88-90; Figur 4 * | 1,3 | |
| | ----- | | |

Der vorliegende Recherchenbericht wurde für alle Patentansprüche erstellt.

| Recherchenort<br>DEN HAAG | Abschlußdatum der Recherche<br>16-06-1986 | Prüfer<br>TIO K.H. |
|---|---|---|